# EUROPEAN PATENT SPECIFICATION

(11) **EP 1 848 162 B1**
(45) Date of publication and mention of the grant of the patent: **08.03.2017**
(21) Application number: 06425271.1
(22) Date of filing: 19.04.2006
(51) Int. Cl.: H04W 28/06, H04L 12/801, H04L 12/805, H04L 12/807, H04W 72/04, H04W 76/04, H04W 84/04

(54) **Method to reduce the transmission latency in GSM/EDGE delay-sensitive applications**
Verfahren zur Wartezeitenverkürzung in verzögerungsempfindlichen GSM/EDGE-Anwendungen
Procédé de diminution du temps de latence de transmission pour des applications GSM/EDGE sensibles aux délais

(43) Date of publication of application: 24.10.2007
(73) Proprietor: Nokia Solutions and Networks GmbH & Co. KG, 81541 Munich (DE)
(72) Inventor: Masseroni, Carlo, 20017 Rho (MI) (IT); Parolari, Sergio, 20133 Milano (IT); Trivisonno, Riccardo, 20146 Milano (IT)
(74) Representative: Nokia Corporation

(56) References cited:
- WO-A-2004/091130
- US-A1- 2004 047 331
- US-B1- 6 415 410
- TECHNICAL SPECIFICATION GROUP GSM/EDGE RADIO ACCESS NETWORK: "3GPP TS 44.060; General Packet Radio Service (GPRS); Mobile Station (MS) - Base Station System (BSS) interface; Radio Link Control/Medium Access Control (RLC/MAC) protocol (Release 7)" 3RD GENERATION PARTNERSHIP PROJECT, [Online] vol. 7.3.0, January 2006 (2006-01), pages 135-184, 429-435, XP002395338 Retrieved from the Internet: URL:http://www.3gpp.org/ftp/Specs/archive/ 44_series/44.060/44060-730.zip> [retrieved on 2006-08-18]
- ERICSSON: "RLC window size in default configurations", 3GPP DRAFT; R2-023131 CR 1766 TO 25331 (REL-5) ON RLC WINDOW SIZE IN DEFAULT CONFIGURATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sophia Antipolis, France; 20021111 - 20021115, 18 November 2002 (2002-11-18), XP050602179, [retrieved on 2002-11-18]

## Description

### FIELD OF THE INVENTION

The present invention relates to the field of mobile radio networks compliant with enhanced data transmissions and integration with multimedia IP services, and more precisely to a method to reduce the transmission latency in GSM/EDGE delay-sensitive applications (referenced acronyms are listed at the end of the description).

### BACKGROUND ON THE 3GPP GSM/EDGE NETWORK

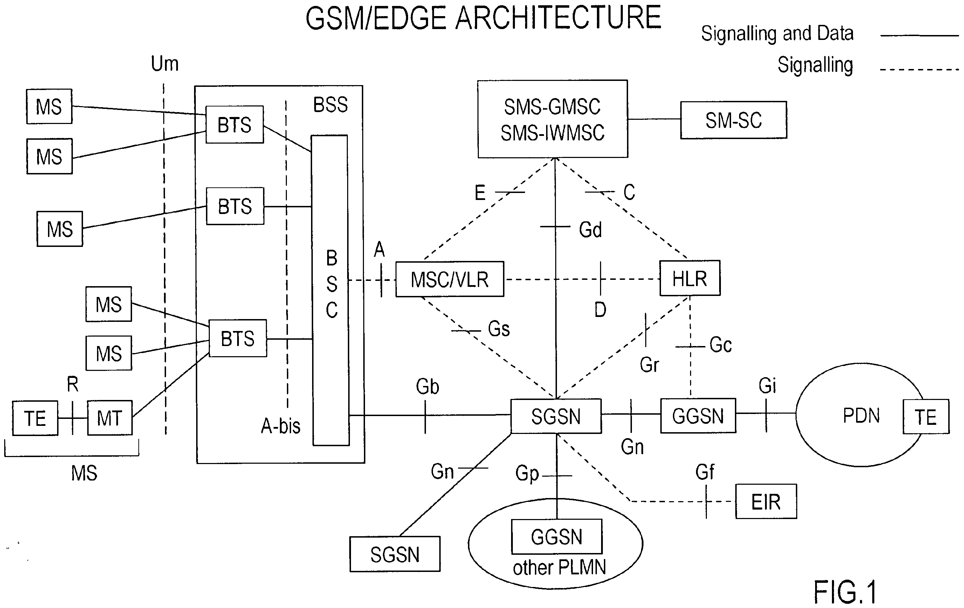

**Fig.1** shows the functional architecture of a GSM/EDGE network according to 3GPP TS 44.060. The depicted network includes the following functional blocks: MSs (TE and MT), BSS (both BTSs and BSC), SGSN, GGSN, EIR, MSC/VLR, HLR, SMS-GMSC, SMS-IWMSC, and SM-SC. Inside the MS the first functional block TE is connected to the second functional block MT through a connection indicated by a Reference point R, typically supporting a standard serial interface. The following interfaces are foreseen: Um, A-bis, A, Gb, Gi, Gp, Gn, Gp, Gf, Gs, Gr, Gd, D, E, C, whose connectivity between the relevant blocks are directly visible in the figure.

Every MS (MT) is connected to its serving BTS through the Um radio interface for exchanging voice and data services and the relevant signalling. The BSS includes a plurality of BTS connected to a BSC through a respective A-bis interface. The BSC is connected to the core network, mainly including MSC and SGSN, through the A and Gb interfaces accounting for circuit switched domain (CS) and packet switched domain (PS), respectively. Former BSSs are evolved in GERANs in order to allow higher data throughputs and incremental redundancy when erroneous data blocks are retransmitted. Furthermore, the Gn interface connects two GSN nodes in the same PLMN system, while the Gp interface connects two GSN nodes belonging to different PLMN systems. In operation, the sub-set of MAC procedures governing the multiplexing of the transmissions on shared channels provides the MS with temporary assignment of resources on the physical layer to sustain the single transmission. Resources are assigned for each so-called UL/DL TBF associated to the MS. More detailed notions on TBFs and network operation are given later in the description of an embodiment of the invention.

### APPROACH TO THE TECHNICAL PROBLEM

3GPP Technical Specifications are being improved to support advanced services. A main target for GERAN is to support real-time multimedia services over IP using the GPRS capability, e.g. VoIP, TV channels, combinational services, etc. In order to get an end-to-end delay sufficiently low to provide a "real-time interaction" between users, the network transmission delay (latency) shall be reduced as more as possible. Some new mechanisms have been recently introduced in the RLC/MAC protocol to reduce latency and guarantee a good voice quality. A first one is based on TTI reduction. A reduced TTI (say of 10 ms, instead of 20) would reduce the RLC RTT, thus allowing the possibility to perform retransmissions fast enough to maintain the end-to-end delay requirements. A second mechanism is the **non-persistent** mode of transmission, as defined in 3GPP TS 44.060, V7.3.0 (2006-01), Release 7; see for example:
- Section 9 - RLC procedures in packet transfer mode;
- clause 9.1 - Procedures and parameters for peer-to-peer operation;
- subclause 9.1.12 - Re-assembly of upper layer PDUs from RLC data units.

The transmission / reception window is a fundamental concept valid in general both for persistent and non-persistent mode of transmission. The following related terms apply:
- WS = Window Size: 64 to 1024 in EGPR; 64 in GPRS.
- SNS = Sequence Number Space: 2048 in EGPRS, and 128 in GPRS.
- BSN - Block sequence number (subclause 9.1.4.2). Each RLC data block contains a block sequence number (BSN) field that is 11 bits in length. At the time that an in-sequence RLC data block is designated for transmission, the value of BSN is set equal to the value of the send state variable V(S).
- V(S) - Send state variable (subclause 9.1.1). Each RLC endpoint transmitter shall have an associated send state variable V(S). V(S) denotes the sequence number of the next in-sequence RLC data block to be transmitted. V(S) can take on the value 0 through SNS - 1. V(S) shall be set to the value 0 at the beginning of each TBF in which the RLC endpoint is the transmitter. The value of V(S) shall be incremented by 1 after transmission of the RLC data block with BSN = V(S). In RLC acknowledged mode, V(S) shall not exceed V(A) modulo SNS by more than the maximum allowed number of outstanding RLC data blocks WS. In RLC non-persistent mode, V(S) may be incremented independently on the value of V(A).
- V(A) - Acknowledge state variable (see subclause 9.1.2). In RLC acknowledged mode, each RLC endpoint transmitter shall have an associated acknowledge state variable V(A). V(A) contains the BSN value of the oldest RLC data block that has not been positively acknowledged by its peer. V(A) can take on the values 0 through SNS - 1. V(A) shall be set to the value 0 at the beginning of each TBF in
- which the RLC endpoint is the transmitter. The value of V(A) shall be updated from the values received from its peer in the received block bitmap (RBB) of the Packet Ack/Nack message.
- V(R) - Receive state variable (see subclause 9.1.5). Each RLC endpoint receiver shall have an associated receive state variable V(R). The receive state variable denotes the BSN which has a value one higher than the highest BSN yet received (modulo SNS). V(R) shall be set to the value '0' at the beginning of each TBF in which the RLC endpoint is the receiver. V(R) can take on the value 0 through SNS.
- V(Q) - Receive window state variable (see subclause 9.1.6). Each RLC endpoint receiver shall have an associated receive window state variable V(Q). The receive window state variable denotes the lowest BSN not yet received (modulo SNS), therefore representing the start of the receive window. V(Q) shall be set to the value 0 at the beginning of each TBF in which the RLC endpoint is the receiver. The receive window state variable can take on the value 0 through SNS -1.

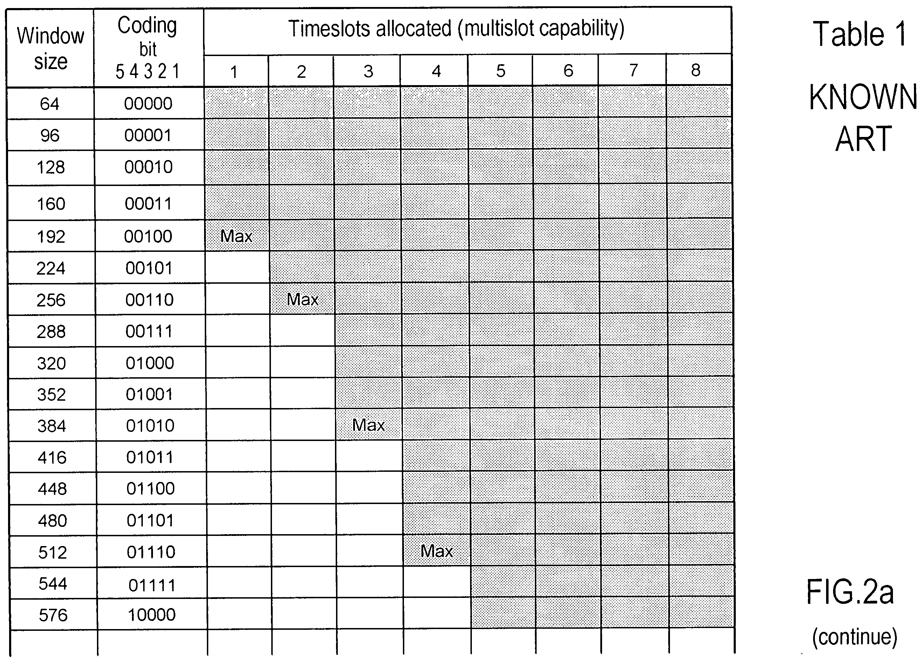

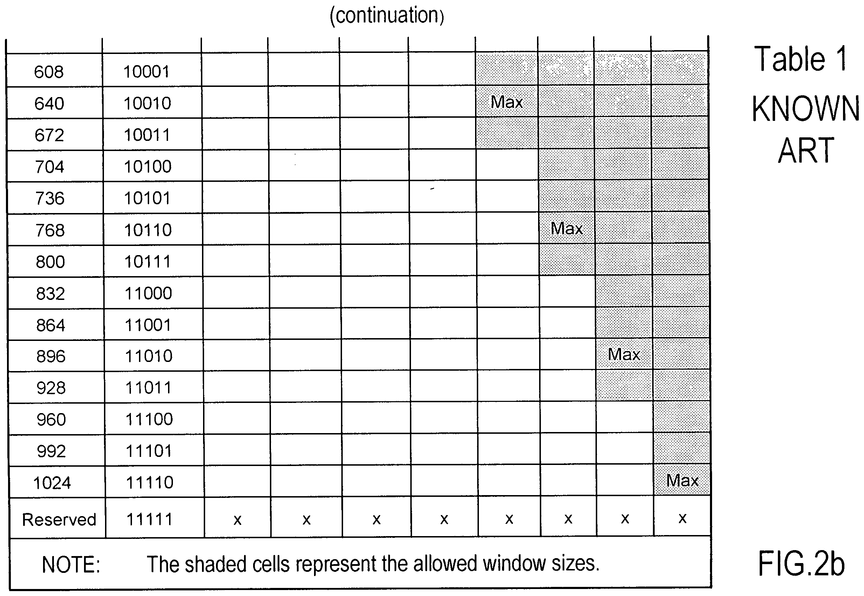

In case of mobile stations with multislot capability, windows for EGPRS TBFs can assume the size values specified in **Table 1** illustrated in **fig.2a** and **2b****,** depending on the number of timeslots allocated to the TBF. In **Table 1** (see subclause 9.1.9) the grey area for a given timeslot allocation represents an usable window size, optionally comprised within 64 RLC/MAC blocks and the Maximum indicated value. In any case, the window size can not assume a value lower then 64 RLC Blocks. The window size determines the receive window at receiving RLC/MAC Layer entity.

R2-023131, 3GPP TSG-RAN2 Meeting #33, Sophia Antipolis, France, 11th-15th November 2002 The RLC window sizes on SRB2 and SRB3 in the default configuration used at handover from GSM where discussed at WG2 #32 (see R2-022651). The current RLC window sizes of 128 on the SRBs require 8 kbyte of RLC buffer memory. For low end UEs with 10kbyte RLC buffer memory, the remaining 2 kbyte memory is insufficient to setup SRB4 and a PS RAB.

### OUTLINED TECHNICAL PROBLEM

Due to "in sequence RLC delivery property", RLC Blocks received inside the receive window cannot be delivered to upper layers (LLC Layer) even if all/the RLC data corresponding to an LLC Frame have been completely received. This behaviour adds additional delay to received data, becoming a drawback for delay sensitive services (e.g. VoIP). The aim of non-persistent mode is to prevent the transmitter from persistent retransmissions in case one or more data blocks are badly received, and the receiver has signalled back the side events. According to 3GPP TS 44.060, paragraph 9.1, the following arguments (updated with the most recent knowledge, although not yet standardized by 3GPP) further help the comprehension of the technical problem (italics is reported from the specification):
*"A TBF is comprised of two peer entities, which are the RLC endpoints. Each RLC endpoint has* a *receiver that receives RLC*/*MAC blocks. Each RLC endpoint also has a transmitter that transmits RLC*/*MAC blocks. A bearer is comprised of one transmitting RLC endpoint and at least one receiving RLC endpoint. The transmitting RLC endpoint transmits RLC*/*MAC data and control blocks and may receive RLC*/*MAC control blocks. Each receiving RLC endpoint receives RLC*/*MAC data and control blocks and may transmit only RLC*/*MAC control blocks. The bearer can operate in RLC non-persistent mode" An RLC data block is considered received, when it is received in a layer 1 frame with consistent parity bits (in EGPRS TBF mode: header and relevant data parity bits) and correctly addresses the receiving RLC endpoint.*
   - *In RLC acknowledged mode, the receive window is defined by the receive window state variable V(Q) in the following inequality [V(Q) ≤ BSN < V(Q)+ WS] modulo SNS All BSNs which meet that criteria are valid within the receive window.*
   - *In RLC unacknowledged mode, all values of BSN are within the receive window.*
   - *In RLC **non-persistent** mode, the receive window is determined after recalculating the receive state variable V(R) (as described in sub-clause 9.1.5) and the corresponding receive window state variable V(Q) (as described in sub-clause 9.1.6). All BSNs which meet the following inequality [V(Q) ≤ BSN ≤ V(R)] modulo SNS are valid within the receive window.*
*Each endpoint's transmitter has a transmit window of size WS. In RLC acknowledged mode and in RLC non-persistent mode, the transmit window is defined by the send state variable V(S) in the following inequality: [V(A) ≤ BSN* < *V(S)] modulo SNS, where [V(S) - V(A)] modulo SNS ≤ WS. All BSNs which meet that criteria are valid within the transmit window. In RLC unacknowledged mode, all values of BSN are within the transmit window.*

According to 3GPP TS 44.060, clause 9.3.4: *"The transfer of RLC data blocks in the RLC non-persistent mode includes non-exhaustive retransmissions. The block sequence number (BSN) in the RLC data block header is used to number the RLC data blocks for reassembly. The receiving side sends DOWNLINK ACK*/*NACK messages to inform the transmitting side of the status of the reception and to convey neighbouring cell measurements".*

According to 3GPP TS 44.060, paragraph 9.1.12: *"During RLC non-persistent mode operation, received upper layer PDUs shall be delivered to the higher layer in the order in which they were originally transmitted. Nevertheless, since some RLC data units may not be received, some upper layer PDUs may be re-assembled and delivered to the higher layer erroneously. During media*/*multimedia bearer each receiving RLC endpoint shall use RLC data units up to the one characterized by BSN = V(Q) - 1 when reassembling upper layer PDUs, even if some RLC data units are missing. Fill bits having the value '0' shall be substituted for RLC data units not received ............. "*.
Despite non-persistent mode of operation, also the minimum window size causes an intrinsic latency. An example is useful to clarify the matter. Let us suppose WS = 64 and until BSN = 9, included, all RLC/MAC radio blocks are correctly received with cadence of 20 ms: hence V(Q)=10. Let us suppose now that all blocks successive to 10 (namely 11,12,13....) arrive to the receiver and that block with BSN = 10 is retransmitted for X times without ever being correctly received. The receiver, before considering the BSN = 10 as not more receivable, and then deliver the windowed data to the upper LLC protocol layer for "in sequence" delivering, must receive the radio block with BSN = 74 (namely V(R)=75). Because of non-persistent mode operation, blocks having a BSN < V(R) - WS will be discarded. In the specific, BSN < 75 - 64 (< 11) corresponding to BSN = 10 will be discarded. At this point all windowed data are delivered to the upper layer with a delay of 20 ms x 64 = 1,280 ms affecting all windowed data (packets and voice), obviously unacceptable for real-time media or multimedia services.

### OBJECT OF THE INVENTION

In view of the state of the art described, object of the present invention is to provide a method to improve the support of delay sensitive services (e.g. Voice over IP) in GERAN networks. More in particular, an improvement to the actual RLC/MAC protocol working in Non-Persistent Mode, as defined in 3GPP TS 44.060, without excessive impacting the current standardization and plenty compatible with the existing and legacy equipments is urgently needed.

### SUMMARY AND ADVANTAGES OF THE INVENTION

The invention achieves said objects in a GSM/EDGE compliant mobile radio network by providing a method to reduce the of media or multimedia real-time transmissions of RLC/MAC radio blocks delivered to the higher protocol layer, as disclosed in claim 1. Additional advantageous features are described in the dependent claims.

The proposed method includes the step of:
- setting, by the network (BSC), resources for establishing at least an unidirectional temporary flows of radio blocks defined at RLC/MAC protocol, called TBF, comprised of two peer entities acting as RLC endpoints, each one having a receiver that receives RLC/MAC radio blocks and a transmitter that transmits RLC/MAC radio blocks;
- transmitting, by the network (BSS), a notification message to both said transmitting and receiving entities (MS, BSS) to address the size of the transmit/receive window inside a range of predetermined values including values lower than 64 RLC/MAC radio blocks;

- receiving, by both the receiving and the transmitting entities, said RLC/MAC messages with said additional signalling bit asserted/negated, decoding said additional signalling bit and behave accordingly;
- transmitting RLC/MAC radio blocks, by the transmitting entity, within the transmitting time window;
- receiving RLC/MAC radio blocks, by the receiving entity, within the receiving time window and in case of not correctly received radio block sending back ACK/NACK signalling messages to inform the transmitting entity of the status of the reception;
- non-exhaustively retransmitting, by the transmitting entity upon reception of ACK/NACK signalling messages, the radio blocks not correctly received by the receiving entity;
- re-assembling, by the receiving entity, and in-sequence delivering to the higher protocol layer all correctly received RLC/MAC radio blocks, considering as definitively lost each radio block not yet correctly received when it falls outside of the receive window.

Profitably, the notification message is broadcast on a common channel.

Alternatively, the notification message corresponds to one of the RLC/MAC messages relevant to the TBFs where the transmit/receive window size information element is included. These dedicated messages already includes a code word information element configurable by the network (BSS) to address inside a range of predetermined values greater than or equal to 64 RLC/MAC radio blocks the size of said transmit/receive window. In this second eventuality, the method further includes the steps of:
- setting, by the network, the asserted/negated logical value of an additional signalling bit in said RLC/MAC messages where the indication of the window size information element is included, to indicate which of the two ranges of predetermined values is addressed by the configuration of said code word;
- receiving, by the mobile station, an RLC/MAC message with the additional signalling bit asserted/negated, decoding the additional signalling bit and setting the transmit/receive window size value accordingly.

Packet Uplink Assignment, Packet Downlink Assignment, Packet Timeslot Reconfigure, etc., are examples of messages relevant to a TBF the transmitting/receiving window size information element is reported. Using non-persistent RLC mode with a proper small value for the window size, the performances of the network for delay sensitive services are greatly improved. Non-persistent mode allows RLC block retransmissions to reduce the packet loss, while the window size value could be used to determine the maximum delay before re-assembling LLC frames. A trade-off has to be set between the quality increase due to lower delays and quality decreasing due to the increased number of lost RLC blocks.

Profitably, the former range of 32 predetermined window size values spanning 64 to 1024 radio blocks (see **Table 1**) is remapped into a second range of 32 predetermined window size values spanning 1 to 64 radio blocks. Experimentally determined optimal values for the window size span 12 to 16 radio block durations. Adopting these values, the large 1,280 ms latency of the previous example is reduced to more acceptable values of 240 to 320 ms, but smaller values are possible without significantly increasing the discarded radio blocks. It can be argued that with the method of the invention an increase of the maximum window size with the number of allocated timeslots (Table 2) is not recognizable.

The MAC protocol must be upgraded with the features of the invention to be proposed for next change of relevant 3GPP standardization. It can be appreciated the advantage of the invention with delay-sensitive services, such as the ones devoted to media/multimedia real-time transmissions. Thanks to the invention the latency is drastically reduced.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1****,** already described in the structure, shows the functional architecture of the GSM/EDGE network;
- **figures 2a** and **2b****,** already described, show a **Table 1** of the known art (broken in two contiguous parts for graphical reasons) illustrating possible sizes of the transmission window as a function of number of timeslots allocated to a Mobile Station with multislot capability;

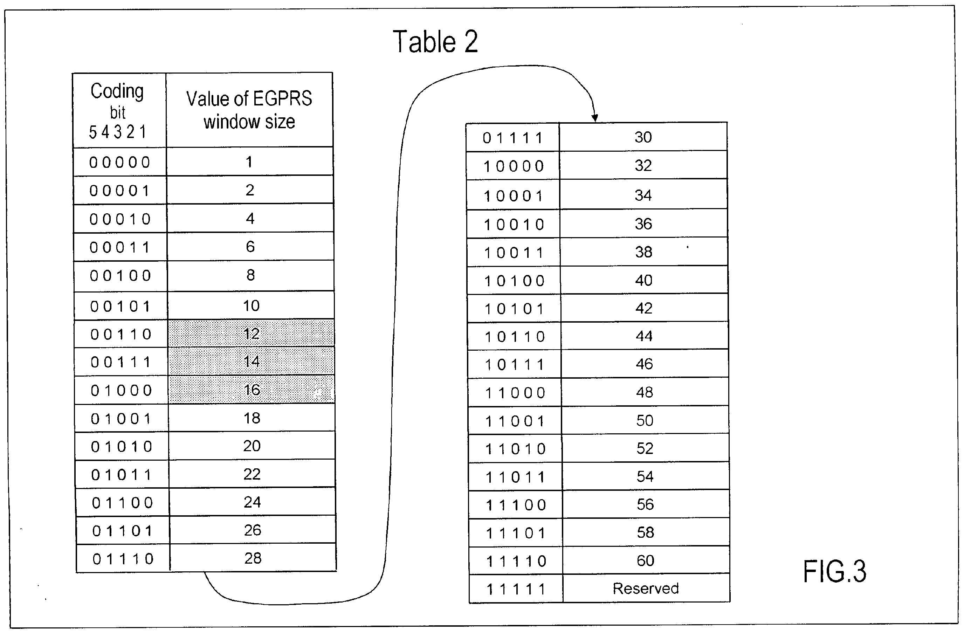

- **fig.3****,** shows a **Table 2** (broken in two contiguous parts for graphical reasons) illustrating possible sizes of the transmission window according to the method of the invention.

### DETAILED DESCRIPTION OF AN EMBODIMENT OF THE INVENTION

With reference to the GSM/EDGE network of **fig.1****,** in operation, at the Um and A-bis interfaces several protocols are stacked upon the physical layer, in particular: SNDCP, LLC, RLC, and MAC. The SNDCP protocol controls the transfer of network protocol units (N-PDUs) between the MS mobile and SGSN node. The main functions of the SNDCP protocol are:
- Multiplexing of packet data protocols, for instance IP.
- Compression / decompression of the user data packets.
- Compression / decompression of the protocol control information.
- Segmentation of NPDUs within LLC frames and re-assembly of the LLC frames the NPDUs.

To carry out these functions the SNDCP protocol avails of a NSAPI to identify in the MS mobile the access point to a packet data protocol PDP, while in SGSN and GGSN nodes it identifies the context associated to an address of the above mentioned PDP protocol.

The RLC gives a reliable radio link and maps the LLC frames within the physical GSM channels. The RLC/MAC avails of the following GPRS channels: PBCCH, PCCCH, PACCH, and PDTCH conveyed on PDCH. The RLC/MAC packet is mapped on radio blocks of the GSM multiframe. A radio block is transported by four consecutive Normal bursts. At physical layer the four Normal bursts are interleaved on four consecutive TDMA frames of 4,615 ms duration. The physical link layer protocol is responsible for FEC block code enabling error detection and correction at the receiver. Four convolutional coding schemes (CS-1,...CS4) are foreseen for the GPRS, and nine modulation and coding schemes (CS-1,...CS9) for the EGPRS, generating different bitrates.

Signalling procedures for accessing the radio channel are controlled by MAC, which also governs dynamic allocation of the resources (request and grant). Dynamic allocation means that a particular transmission resource, consisting for instance of a PDCH channel on a physical timeslot, is made time division shareable among more MS mobiles, each of them being engaged in an active session of data transfer, or signalling, through the same transmission resource jointly assigned. To the specific aim of dynamic allocation, the BSC includes a PCU implementing a proprietary scheduling algorithm.

The sub-set of MAC procedures governing the multiplexing of the transmissions on the shared channels, provide the MS with temporary assignment of resources, called TBFs, on the physical layer to sustain the single transmission. A TBF may include memory buffer to house the queues of RLC/MAC blocks. Each TBF assignment enables the unidirectional transfer of radio blocks (for payload data and signalling) within a cell between the network and a mobile station MS, or vice versa. Control messages for the establishment/abatement of a connection between service points and the allocation/deallocation of relevant supported physical resources, for instance the TBF buffers, contemplate different opportunities capable of covering the whole survey foreseen in the packet transfer mode of the RR sublayer. For simplicity, it is here described a very limited survey of establishment/abatement of TBF connections and of the relevant operation modes. We can start from the establishment of a TBF uplink connection following a Packet Transfer originated by the mobile. In this case the mobile requires the assignment of a GPRS channel sending a PACKET CHANNEL REQUEST message including the TBF resources requested for the transfer of packets to the network. In case of reception, the network replies with a PACKET UPLINK ASSIGNMENT message on the control channel allocating to the mobile the resources requested for the uplink transfer of packets. The resources include one or more PDCH channels and a TFI value. The network does not assign any buffer in uplink direction (the buffer resides in the mobile). The network requires simply knowing the number of blocks that a MS mobile intends to transmit. We can now proceed examining the assignment of a TBF downlink following a Packet Transfer ended towards the mobile. In this case at the end of the paging procedure, the network sends the mobile a PACKET DOWNLINK ASSIGNMENT message in the Ready state on the control channel, with enclosed the list of PDCH channels allocated for the downlink transfer. A buffer, relevant to the downlink TBF, is purposely allocated to contain the RLC/MAC blocks to be sent.

In the majority of the cases a TBF is kept alive only for the transfer of one or more LLC protocol units, to the right purpose of transferring the corresponding RLC/MAC blocks. The network assigns to each TBF its own temporary identifier, called TFI (Temporary Flow Identity). The mobile shall assume that the TFI value is unique among TBF competitors in each direction, uplink or downlink. A RLC/MAC data block is identified to the TBF to which it is associated through its own field where the identifier TFI is written, and another field to indicate the uplink or downlink direction of the block. Should the RLC/MAC block be referred to a control message, a field is foreseen to indicate the message transmission direction and type. In the case of dynamic allocation, the header of each RLC/MAC block transmitted on a PDCH channel in "downlink" direction includes an additional field called USF, which is used by the network in the form of a flag to control the time division multiplexing of different mobile stations on a physical channel PDCH in uplink direction. We can now better qualify the already mentioned PACKET UPLINK ASSIGNMENT message, sent by the network towards the mobiles, stating that it includes: the identifier TFI of the downlink/TBF buffer containing the control block carrying this message, the list of the allocated PDCH channels (time slots), and a corresponding USF value for each allocated channel (timeslot). One USF is scheduled for the transmission of one radio block. Three bits are foreseen for the USF field that enable to unambiguously discriminate up to eight users sharing a time-slot, also in the borderline case in which the single TBF buffer are associated all the eight time slots of a TDMA frame.

According to the method of the invention the BSC through the PCU assigns resources to set up (or reconfigure) a TBF associated to the uplink or downlink transmission of radio blocks from/to an MS. Several RLC/MAC messages are dealing with TBFs, for example, Packet Uplink Assignment, Packet Downlink Assignment, Packet Timeslot Reconfigure, etc. A 5-bit code word "Coding" is configured in the header of the involved RLC/MAC message to select the transmitting/receiving window size.

In a first embodiment of the invention, the network (BSS) transmit a notification message to the MSs and the BS to address the size of the transmit/receive window inside a range of predetermined values including values lower than 64 RLC/MAC radio blocks. The notification message could be a simple signalling bit (scaling bit). As the only MSs are concerned, the notification message could be broadcast with Common Channel Information.

In a second embodiment of the invention, the notification message coincides with one of said dedicated messages where the indication of the transmit/receive window size is included. In this second eventuality, an additional signalling bit, also called scaling bit, is asserted/negated by the network according to two opportunities offered by the new MAC protocol to properly select the window size. With both the embodiments of the invention a subdivision of the time windows for type of services is made possible. Traditional non real-time services, e.g. file transfer, avail of standard window sizes illustrated in Table 1 for MSs with multislot capability. Delay-sensitive services, e.g. media or multimedia real-time transmissions avail of new window sizes illustrated in **Table 2** for MSs with either single-slot or multislot capability, indifferently. The scaling bit is asserted or negated by BSC accordingly. Non-persistent RLC/MAC transmission/reception mode is assumed as previously illustrated in conformance with 3GPP GSM/EDGE standardization. Both peer entities comprised in a TBF receive RLC/MAC messages with the proper setting of the scaling bit; these entities decode the scaling bit and behave accordingly. The behaviour consists of alternatively assuming **Table 1** or **Table 2** on the basis of the logical value of the scaling bit. The association of **Table 1** to the scaling bit asserted and **Table 2** to the negated value, or vice versa, is a matter of free choice. Whatever Table 1 or 2 is selected, the same configuration of the 5-bit "coding" information element is maintained in order to reduce the impact on the current standardization to the only scaling bit.

Although the invention has been described with particular reference to a preferred embodiment, it will be evident to those skilled in the art, that the present invention is not limited thereto, but further variations and modifications may be applied without departing from the scope thereof.

### USED ACRONYMS

- 3GPP -: 3^{rd} Generation Partnership Program
- BCCH -: Broadcast Control Channel
- BSC -: Base Station Controller
- BSN -: Block Sequence Number
- BSS -: Base Station Subsystem
- BTS -: Base Transceiver Station
- CCCH -: Common Control Channel
- CS -: Circuit Switched
Coding Scheme
- DL -: Downlink
- EDGE -: Enhanced Data rates for GSM Evolution
- EGPRS -: Enhanced GPRS
- FACCH -: Fast Associated Control Channel
- GERAN -: GSM/EDGE Radio Access Network
- GGSN -: Gateway GSN
- GMSC -: Gateway MSC
- GPRS -: General Packet Radio Service
- GSM -: Global System for Mobile communications
- IWMSC -: InterWorking MSC
- LLC -: Logical Link Control
- MAC -: Medium Access Protocol
- MBMS -: Multimedia Broadcast Multicast Service
- MCS -: Modulation and Coding Scheme
- MS -: Mobile Station
- MSC -: Message Switching Centre
- MT -: Mobile Terminated
- NPDU -: Network PDU
- NSAPI -: Network SAPI
- PACCH -: Packet Associated Control Channel
- PBCCH -: Packet Broadcast Control Channel
- PCCCH -: Packet Common Control Channel
- PCU -: Packet Control Unit
- PDTCH -: Packet Data Traffic Channel
- PDCH -: Packet Data Channel
- PDU -: Protocol Data Unit
- PLMN -: Public Land Mobile Network
- PS -: Packet Switched
- RAN -: Radio Access Network
- RBB -: Received Block Bitmap
- RLC -: Radio Link Control
- RTT -: Round Trip Time
- RTTI -: Reduced TTI
- SAPI -: Service Access Point Identifier
- SGSN -: Service GPRS Support Node
- SMS -: Short Message Service
- SNS -: Sequence Number Space
- SNDCP -: Subnetwork Dependent Convergence Protocol
- TBF -: Temporary Block Flow
- TE -: Terminal Equipment
- TFI -: TBF identifier
- TTI -: Transmit Time Interval
- UL: - Uplink
- USF: - Uplink State Flag
- VLR: - Visitor Location Register
- VoIP: - Voice over IP
- V(A): - Acknowledge state variable
- V(Q): - Receive window state variable
- V(R): - Receive state variable
- V(S): - Send state variable
- WS: - Window Size

## Claims

1. A method, in a Global System for Mobile communications/Enhanced Data rates for GSM Evolution, further referred to as GSM/EDGE compliant mobile radio network, to allow to reduce latency of media or multimedia real-time transmissions of Radio Link control/Medium Access Control further referred to as RLC/MAC radio blocks delivered to a higher protocol layer, including the steps of:
- setting, by the network (BSS), resources for establishing at least a unidirectional temporary flow of radio blocks defined at RLC/MAC protocol, called Temporary Block Flow further referred to as TBF, comprised of two peer entities comprising a transmitting entity and a receiving entity (MS, BSS) acting as RLC endpoints, each one having a receiver that receives RLC/MAC radio blocks and a transmitter that transmits RLC/MAC radio blocks;
- transmitting RLC/MAC radio blocks, by the transmitting entity (MS, BSS), within a transmit window;
- receiving RLC/MAC radio blocks, by the receiving entity (BSS, MS) , within a receive window and, in case of not correctly received radio blocks, sending back Acknowledge/NotAcknowledge further referred to as ACK/NACK signalling messages to inform the transmitting entity of the status of the reception;
- non-exhaustively retransmitting, by the transmitting entity (MS, BSS) upon reception of ACK/NACK signalling messages, the radio blocks not correctly received by the receiving entity;
- re-assembling, by the receiving entity (BSS, MS), and in-sequence delivering to the higher protocol layer all correctly received RLC/MAC radio blocks, considering a radio block not yet correctly received as definitively lost when it falls outside of the receive window.
**characterized in that** further includes the step of:
- transmitting, by the network (BSS), a notification message to both said transmitting and receiving entities (MS, BSS) to address the size of the transmit/receive window inside a range of predetermined values including values lower than 64 RLC/MAC radio blocks.

2. The method of claim 1, **characterized in that** said notification message is broadcast on a common channel.

3. The method of claim 1, **characterized in that** said notification message corresponds to one of the RLC/MAC messages relevant to the TBFs where a transmit/receive window size information element is included, already including a code word configurable by the network (BSS) to address inside a range of predetermined values greater than or equal to 64 RLC/MAC radio blocks the size of said transmit/receive window.

4. The method of claim 3, **characterized in that** further includes the steps of:
- setting, by the network (BSS), an asserted/negated logical value of an additional signalling bit in said RLC/MAC messages where the indication of the window size information element is included, to indicate which of the two ranges of predetermined values is addressed by the configuration of said code word;
- receiving, by a mobile station, said RLC/MAC messages with said additional signalling bit set to one or zero, decoding said additional signalling bit and setting the transmit/receive window size value accordingly.

5. A communications system for a Global System for Mobile communications/Enhanced Data rates for GSM Evolution, further referred to as GSM/EDGE compliant mobile radio network for reducing latency of media or multimedia real-time transmissions of Radio Link control/Medium Access Control further referred to as RLC/MAC radio blocks delivered to a higher protocol layer, the apparatus comprising:
- means for setting resources for establishing at least a unidirectional temporary flow of radio blocks defined at RLC/MAC protocol, called Temporary Block Flow further referred to as TBF, comprised of two peer entities comprising a transmitting entity and a receiving entity (MS, BSS) acting as RLC endpoints, each one having a receiver that receives RLC/MAC radio blocks and a transmitter that transmits RLC/MAC radio blocks;
- means for transmitting RLC/MAC radio blocks within a transmit window;
- means for receiving RLC/MAC radio blocks within a receive window and, in case of not correctly received radio blocks, sending back Acknowledge/NotAcknowledge further referred to as ACK/NACK signalling messages to inform the transmitting entity of the status of the reception;
- wherein the means for transmitting is configured to non-exhaustively retransmit, upon reception of ACK/NACK signalling messages, the radio blocks not correctly received by the receiving entity;
- means for re-assembling and in-sequence delivering to the higher protocol layer all correctly received RLC/MAC radio blocks, considering a radio block not yet correctly received as definitively lost when it falls outside of the receive window.
**characterized in that** the means for transmitting is configured to
- transmit a notification message to both said transmitting and receiving entities (MS, BSS) to address the size of the transmit/receive window inside a range of predetermined values including values lower than 64 RLC/MAC radio blocks.

6. The communications system according to claim 5, wherein the system is a communications network.

## Patentansprüche

1. Verfahren in einem mit Global System for Mobile communications/Enhanced Data rates for GSM Evolution, auch bezeichnet als GSM/EDGE, konformen Mobilfunknetz, um zu ermöglichen, dass die Latenz von Medien- oder Multimedienechtzeitübertragungen von Radio Link Control/Medium Access Control, auch bezeichnet als RLC/MAC, Radio Blocks, die an eine höhere Protokollschicht übergeben werden, verringert wird, enthaltend folgende Schritte:
- Festlegen von Ressourcen durch das Netz (BSS) zum Aufbauen mindestens eines einseitig gerichteten, temporären Flusses von am RLC/MAC-Protokoll definierten Radio Blocks, genannt Temporary Block Flow, auch bezeichnet als TBF, umfasst aus zwei Partnerinstanzen, die eine Sendeinstanz und eine Empfangsinstanz (MS, BSS) umfassen, die als RLC-Endpunkte dienen, welche je einen Empfänger, der RLC/MAC Radio Blocks empfängt, und einen Sender, der RLC/MAC Radio Blocks sendet, aufweisen;
- Senden von RLC/MAC Radio Blocks durch die Sendeinstanz (MS, BSS) innerhalb eines Sendefensters;
- Empfangen von RLC/MAC Radio Blocks durch die Empfangsinstanz (BSS, MS) innerhalb eines Empfangsfensters und im Fall von nicht richtig empfangenen Radio Blocks Zurücksenden von Signalisierungsmeldungen für Acknowledge/NotAcknowledge, auch bezeichnet als ACK/NACK, um die Sendeinstanz über den Status des Empfangs zu informieren;
- nicht abschließendes Neusenden der durch die Empfangsinstanz nicht richtig empfangenen Radio Blocks durch die Sendeinstanz (MS, BSS) nach dem Empfang von ACK/NACK-Signalisierungsmeldungen;
- Reassemblieren aller richtig empfangenen RLC/MAC Radio Blocks durch die Empfangsinstanz (BSS, MS) und sequenzielles Übergeben dieser RLC/MAC Radio Blocks an die höhere Protokollschicht, wobei ein noch nicht richtig empfangener Radio Block als definitiv verloren angesehen wird, wenn er außerhalb des Empfangsfensters liegt,
**dadurch gekennzeichnet, dass** es auch folgenden Schritt enthält:
- Senden einer Benachrichtigungsmeldung durch das Netz (BSS) sowohl an die Sendeinstanz als auch an die Empfangsinstanz (MS, BSS) zum Adressieren der Größe des Sende-/Empfangsfensters innerhalb eines Bereichs von vorbestimmten Werten, die Werte enthalten, die kleiner als 64 RLC/MAC Radio Blocks sind.

2. Verfahren nach Anspruch 1, **dadurch gekennzeichnet, dass** die Benachrichtigungsmeldung auf einem gemeinsamen Kanal rundgesendet wird.

3. Verfahren nach Anspruch 1, **dadurch gekennzeichnet, dass** die Benachrichtigungsmeldung mit einer der für die TBFs relevanten RLC/MAC-Meldungen korrespondiert, in denen ein Sende-/Empfangsfenstergröße-Informationselement enthalten ist, die bereits ein durch das Netz (BSS) konfigurierbares Codewort zum Adressieren der Größe des Sende-/Empfangsfensters innerhalb eines Bereichs von vorbestimmten Werten enthalten, die größer als oder gleich 64 RLC/MAC Radio Blocks sind.

4. Verfahren nach Anspruch 3, **dadurch gekennzeichnet, dass** es auch folgende Schritte enthält:
- Festlegen eines für wahr erklärten/negierten logischen Werts eines zusätzlichen Signalisierungsbits in den RLC/MAC-Meldungen, in denen die Angabe des Fenstergröße-Informationselements enthalten ist, um anzugeben, welcher der zwei Bereiche von vorbestimmten Werten durch die Konfiguration des Codeworts adressiert wird, durch das Netz (BSS);
- Empfangen der RLC/MAC-Meldungen, deren zusätzliches Signalisierungsbit auf eins oder null festgelegt ist, durch eine Mobilstation, Decodieren des zusätzlichen Signalisierungsbits und entsprechendes Festlegen des Sende-/Empfangsfenstergrößewerts.

5. Kommunikationssystem für ein mit Global System for Mobile communications/Enhanced Data rates for GSM Evolution, auch bezeichnet als GSM/EDGE, konformes Mobilfunknetz zum Verringern der Latenz von Medien- oder Multimedienechtzeitübertragungen von Radio Link Control/Medium Access Control, auch bezeichnet als RLC/MAC, Radio Blocks, die an eine höhere Protokollschicht übergeben werden, wobei die Vorrichtung Folgendes umfasst:
- Mittel zum Festlegen von Ressourcen zum Aufbauen mindestens eines einseitig gerichteten, temporären Flusses von am RLC/MAC-Protokoll definierten Radio Blocks, genannt Temporary Block Flow, auch bezeichnet als TBF, umfasst aus zwei Partnerinstanzen, die eine Sendeinstanz und eine Empfangsinstanz (MS, BSS) umfassen, die als RLC-Endpunkte dienen, welche je einen Empfänger, der RLC/MAC Radio Blocks empfängt, und einen Sender, der RLC/MAC Radio Blocks sendet, aufweisen;
- Mittel zum Senden von RLC/MAC Radio Blocks innerhalb eines Sendefensters;
- Mittel zum Empfangen von RLC/MAC Radio Blocks innerhalb eines Empfangsfensters und im Fall von nicht richtig empfangenen Radio Blocks Zurücksenden von Signalisierungsmeldungen für Acknowledge/NotAcknowledge, auch bezeichnet als ACK/NACK, um die Sendeinstanz über den Status des Empfangs zu informieren;
- wobei das Mittel zum Senden konfiguriert ist, um nach dem Empfang von ACK/NACK-Signalisierungsmeldungen die durch die Empfangsinstanz nicht richtig empfangenen Radio Blocks nicht abschließend neu zu senden;
- Mittel zum Reassemblieren aller richtig empfangenen RLC/MAC Radio Blocks und sequenzielles Übergeben dieser RLC/MAC Radio Blocks an die höhere Protokollschicht, wobei ein noch nicht richtig empfangener Radio Block als definitiv verloren angesehen wird, wenn er außerhalb des Empfangsfensters liegt,
**dadurch gekennzeichnet, dass** das Mittel zum Senden konfiguriert ist, um
- eine Benachrichtigungsmeldung sowohl an die Sendeinstanz als auch an die Empfangsinstanz (MS, BSS) zum Adressieren der Größe des Sende-/Empfangsfensters innerhalb eines Bereichs von vorbestimmten Werten, die Werte enthalten, die kleiner als 64 RLC/MAC Radio Blocks sind, zu senden.

6. Kommunikationssystem nach Anspruch 5, wobei das System ein Kommunikationsnetz ist.

## Revendications

1. Procédé, dans un réseau radio mobile compatible GSM/EDGE, système mondial de communication avec les mobiles/débits de données améliorés pour une évolution du GSM, permettant de réduire le temps de latence de transmissions temps réel média ou multimédia de blocs radio de contrôle de liaison radio/contrôle d'accès au support RLC/MAC transmis à une couche de protocole supérieure, comprenant les étapes suivantes :
- déterminer, par le réseau (BSS), des ressources pour établir au moins un flux temporaire unidirectionnel de blocs radio définis au niveau du protocole RLC/MAC, appelé flux de blocs temporaire TBF, comportant deux entités homologues comprenant une entité de transmission et une entité de réception (MS, BSS) agissant comme des points d'extrémité RLC, chacun ayant un récepteur qui reçoit des blocs radio RLC/MAC et un transmetteur qui transmet des blocs radio RLC/MAC ;
- transmettre des blocs radio RLC/MAC, par l'entité de transmission (MS, BSS), à l'intérieur d'une fenêtre de transmission ;
- recevoir des blocs radio RLC/MAC, par l'entité de réception (BSS, MS), à l'intérieur d'une fenêtre de réception et, dans le cas de blocs radio non correctement reçus, renvoyer des messages de signalisation d'accusé de réception/accusé de réception négatif ACK/NACK pour indiquer à l'entité de transmission l'état de la réception ;
- retransmettre de façon non exhaustive, par l'entité de transmission (MS, BSS) lors de la réception de messages de signalisation ACK/NACK, les blocs radio non correctement reçus par l'entité de réception ;
- ré-assembler, par l'entité de réception (BSS, MS), et transmettre dans l'ordre à la couche de protocole supérieure tous les blocs radio RLC/MAC reçus correctement, en considérant un bloc radio pas encore reçu correctement comme définitivement perdu lorsqu'il tombe à l'extérieur de la fenêtre de réception ;
**caractérisé en ce qu'**il comprend en outre l'étape suivants :
- transmettre, par le réseau (BSS), un message de notification auxdites deux entités de transmission et de réception (MS, BSS) pour fixer la taille de la fenêtre de transmission/réception à l'intérieur d'une plage de valeurs prédéterminées comportant des valeurs inférieures à 64 blocs radio RLC/MAC.

2. Procédé selon la revendication 1, **caractérisé en ce que** ledit message de notification est transmis sur un canal commun.

3. Procédé selon la revendication 1, **caractérisé en ce que** ledit message de notification correspond à un des messages RLC/MAC applicables aux TBF dans lequel un élément d'informations de taille de fenêtre de transmission/réception est inclus, comportant déjà un mot codé configurable par le réseau (BSS) pour fixer à l'intérieur d'une plage de valeurs prédéterminées supérieures ou égales à 64 blocs radio RLC/MAC la taille de ladite fenêtre de transmission/réception.

4. Procédé selon la revendication 3, **caractérisé en ce qu'**il comprend en outre les étapes suivantes :
- déterminer, par le réseau (BSS), une valeur logique affirmée/annulée d'un bit de signalisation additionnel dans lesdits messages RLC/MAC dans lesquels l'indication de l'élément d'informations de taille de fenêtre est inclus, pour indiquer laquelle des deux plages de valeurs prédéterminées est satisfaite par la configuration dudit mot codé ;
- recevoir, par une station mobile, lesdits messages RLC/MAC avec ledit bit de signalisation additionnel positionné à 1 ou 0, décoder ledit bit de signalisation additionnel et fixer la valeur de taille de fenêtre de transmission/réception en conséquence.

5. Système de communication pour un réseau radio mobile compatible GSM/EDGE, système mondial de communication avec les mobiles/débits de données améliorés pour une évolution du GSM, permettant de réduire le temps de latence de transmissions temps réel média ou multimédia de blocs radio de contrôle de liaison radio/contrôle d'accès au support RLC/MAC transmis à une couche de protocole supérieure, l'appareil comprenant :
- des moyens destinés à déterminer des ressources pour établir au moins un flux temporaire unidirectionnel de blocs radio définis au niveau du protocole RLC/MAC, appelé flux de blocs temporaire TBF, comportant deux entités homologues comprenant une entité de transmission et une entité de réception (MS, BSS) agissant comme des points d'extrémité RLC, chacun ayant un récepteur qui reçoit des blocs radio RLC/MAC et un transmetteur qui transmet des blocs radio RLC/MAC ;
- des moyens destinés à transmettre des blocs radio RLC/MAC à l'intérieur d'une fenêtre de transmission ;
- des moyens destinés à recevoir des blocs radio RLC/MAC à l'intérieur d'une fenêtre de réception et, dans le cas de blocs radio non correctement reçus, renvoyer des messages de signalisation d'accusé de réception/accusé de réception négatif ACK/NACK pour indiquer à l'entité de transmission l'état de la réception ;
- les moyens de transmission étant configurés pour retransmettre de façon non exhaustive, lors de la réception de messages de signalisation ACK/NACK, les blocs radio non correctement reçus par l'entité de réception ;
- des moyens destinés à ré-assembler et à transmettre dans l'ordre à la couche de protocole supérieure tous les blocs radio RLC/MAC reçus correctement, en considérant un bloc radio pas encore reçu correctement comme définitivement perdu lorsqu'il tombe à l'extérieur de la fenêtre de réception ;
caractérisé en ce les moyens de transmission sont configurés pour
- transmettre un message de notification auxdites deux entités de transmission et de réception (MS, BSS) pour fixer la taille de la fenêtre de transmission/réception à l'intérieur d'une plage de valeurs prédéterminées comportant des valeurs inférieures à 64 blocs radio RLC/MAC.

6. Système de communication selon la revendication 5, dans lequel le système est un réseau de communication.
